# EUROPÄISCHE PATENTSCHRIFT

(11) **EP 3 175 540 B1**
(45) Veröffentlichungstag und Bekanntmachung des Hinweises auf die Patenterteilung: **07.04.2021**
(21) Anmeldenummer: 15741118.2
(22) Anmeldetag: 10.07.2015
(51) Int. Cl.: H02K 15/16, H02K 7/14

(54) **ELEKTROMOTOR, AUFWEISEND EINEN STATOR UND EINEN ROTOR, UND VERFAHREN ZUM HERSTELLEN EINER ELEKTROMOTORISCH ANGETRIEBENEN MASCHINE**
ELECTRIC MOTOR COMPRISING A STATOR AND A ROTOR, AND METHOD FOR PRODUCING AN ELECTRIC MOTOR-DRIVEN MACHINE
MOTEUR ÉLECTRIQUE, COMPORTANT UN STATOR ET UN ROTOR, ET PROCÉDÉ SERVANT À FABRIQUER UNE MACHINE ENTRAÎNÉE PAR UN MOTEUR ÉLECTRIQUE

(30) Priorität: 28.07.2014 DE 102014010918
(43) Veröffentlichungstag der Anmeldung: 07.06.2017
(73) Patentinhaber: SEW-EURODRIVE GmbH & Co. KG, 76646 Bruchsal (DE)
(72) Erfinder: MASUCH, Volker, 75038 Oberderdingen (DE)
(86) Internationale Anmeldenummer: PCT/EP2015/001430
(87) Internationale Veröffentlichungsnummer: WO 2016/015826

(56) Entgegenhaltungen:
- EP-A1- 0 468 168
- EP-A1- 2 573 386
- EP-A2- 1 895 641
- WO-A2-2009/140954
- DE-A1- 10 331 278

## Beschreibung

Die Erfindung betrifft ein Verfahren zum Herstellen einer elektromotorisch angetriebenen Maschine und einen Elektromotor, aufweisend einen Stator und einen Rotor, zur Durchführung des Verfahrens.

Es ist allgemein bekannt, dass ein Elektromotor einen in einem Stator gelagerten Rotor aufweist.

Aus der EP 1 895 641 A2 ist als nächstliegender Stand der Technik ein Direktantrieb bekannt.

Aus der WO 2009/140954 A2 ist eine Vorrichtung zur Fixierung eines Rotors in einer elektrischen Maschine bekannt.

Der Erfindung liegt daher die Aufgabe zugrunde, einen Elektromotor und ein dafür vorgesehenes Herstellungsverfahren weiterzubilden, wobei die Lagerung des Rotors nicht im Stator, sondern in der vom Elektromotor angetriebenen Maschine ausgeführt wird.

Erfindungsgemäß wird die Aufgabe bei dem Verfahren zum Herstellen einer elektromotorisch angetriebenen Maschine, nach den in Anspruch 1 angegebenen Merkmalen gelöst.

Wichtige Merkmale bei dem Verfahren zum Herstellen einer elektromotorisch angetriebenen Maschine,
wobei ein Elektromotor, aufweisend einen Stator und einen Rotor, zum elektromotorischen Antrieb der Maschine vorgesehen ist,
wobei die Lagerung des Rotors nicht im Stator, sondern in der vom Elektromotor angetriebenen Maschine ausgeführt wird,
sind, dass
- in einem ersten Verfahrensschritt der Rotor in einem mit dem Statorgehäuse des Stators verbundenen Positionierhilfsteil aufgenommen wird, wobei das Positionierhilfsteil den Rotor positioniert und ausgerichtet und wobei das Positionierhilfsteil am Statorgehäuseteil zentriert und ausgerichtet ist,
- in einem darauf folgenden Verfahrensschritt ein Spannsatz in einen Aufnahmebereich eines Trägerteils des Rotors eingeführt wird,
- ein Innenflanschteil lose am Statorgehäuse angeordnet wird,
- in einem darauf folgenden Verfahrensschritt der Spannsatz betätigt wird, so dass das Innenflanschteil mit dem Trägerteil kraftschlüssig verbunden wird und relativ ausgerichtet wird und zentriert wird,
- in einem darauf folgenden Verfahrensschritt Statorgehäuse und Innenflanschteil fest verbunden wird,
- in einem darauf folgenden Verfahrensschritt das Positionierhilfsteil entfernt wird,
- in einem darauf folgenden Verfahrensschritt der Rotor verbunden wird mit einem Hohlwellenabschnitt einer anzutreibenden Welle, insbesondere einer Maschine, und das Statorgehäuse mit einem Gehäuse insbesondere der Maschine, verbunden, in welchem die Welle gelagert ist,
- in einem darauffolgenden Verfahrensschritt der Spannsatz deaktiviert, insbesondere also gelöst, wird, axial verschoben wird und dann mit dem Innenflanschteil verbunden wird.

Von Vorteil ist dabei, dass die Rotorwelle ohne Lagerung in dem Statorgehäuseteil zentrierbar und ausrichtbar und diese Ausrichtung und Zentrierung aufrecht erhaltbar ist mittels eines einfach betätigbaren Spannsatzes. Zwar verhindert der Spannsatz im betätigten Zustand den Betrieb des Motors, aber nach einfacher Deaktivierung des Spannsatzes und axialem Verschieben ist der Betrieb ungestört ausführbar.

Der Spannsatz kann in den Aufnahmebereich so eingeführt werden, dass er an einem Anschlag anliegt.

Statorgehäuse und Innenflanschteil können mittels einer Schraubverbindung fest verbunden werden.

Der Spannsatz kann mit dem Innenflanschteil schraubverbunden werden.

Bei einer vorteilhaften Ausgestaltung wird das Verbinden des Rotors mit dem Hohlwellenabschnitt der anzutreibenden Welle mittels eines weiteren Spannsatzes ausgeführt.

Bei einer vorteilhaften Ausgestaltung ist der weitere Spannsatz ein Hydraulikspannsatz, der in einer Buchse integriert angeordnet ist.

Bei einer vorteilhaften Ausgestaltung ist ein Öl befüllter Raumbereich vom Material der Buchse umgeben und mit einem derartigen Druck beaufschlagbar, dass die radiale Breite der Buchse veränderbar ist. Von Vorteil ist dabei, dass ein einfaches schnelles Verbinden des Rotors mit der anzutreibenden Welle ausführbar ist.

Die Erfindung bezieht sich auch auf einen Elektromotor zur Durchführung eines vorgenannten Verfahrens, wobei der Elektromotor einen Stator und einen Rotor aufweist,
wobei der Rotor eine Rotorwelle und ein mit der Rotorwelle drehfest verbundenes Trägerteil aufweist,
wobei der Stator ein Statorgehäuse und ein mit dem Statorgehäuse verbundenes Innenflanschteil aufweist,
wobei ein Spannsatz zwischen Trägerteil und Innenflanschteil angeordnet ist.

Von Vorteil ist dabei, dass mittels des Spannsatzes die Ausrichtung und Zentrierung des Trägerteils zum Innenflanschteil fixierbar ist, insbesondere auch bei Transport des Motors. Besonders vorteilig ist dabei, dass keine Lagerung der Rotorwelle im Statorgehäuse vorgesehen sein muss. Ohne den Spannsatz wäre der Rotor samt Trägerteil frei beweglich im Stator. Nur der Spannsatz bewirkt die Fixierung der relativen Ausrichtung und Zentrierung zum Innenflanschteil.

Erfindungsgemäß ist der Spannsatz im nicht betätigten Zustand, axial verschiebbar, wobei er axial durch eine am Trägerteil und/oder Innenflanschteil ausgeführte erste Stufe axial begrenzt ist. Von Vorteil ist dabei, dass der Spannsatz im betätigten und/oder aktivierten Zustand eine größere radiale Ausdehnung aufweist als im nicht aktivierten und/oder nichtbetätigten Zustand. Somit ist bei Betätigung und/oder Aktivierung ein Verspannen des Trägerteils am Innenflanschteil ausführbar. Bei Nicht-Betätigung oder Nicht-Aktivierung ist der Spannsatz axial zwischen Innenflanschteil und Trägerteil verschiebbar angeordnet. Der Verschiebefreiheitsgrad ist zumindest in der axialen Richtung begrenzt durch den Anschlag, wobei der Anschlag in einfacher Weise ausbildbar ist mittels einer Stufenbohrung oder einer gestuften Ausfräsung

Erfindungsgemäß weistdas Trägerteil einen Aufnahmebereich auf, in den der Spannsatz eingeführt ist, wobei der Aufnahmebereich einen gestuften, monoton ansteigenden Innendurchmesserverlauf aufweist,

Erfindungsgemäß ist der Spannsatz an einer ersten axialen Verschiebeposition am Innenflanschteil arretierbar oder befestigbar, wobei er beabstandet ist vom Trägerteil. Von Vorteil ist dabei, dass eine Arretierung durch kraftschlüssiges Verbinden ermöglicht ist. Hierbei wird mittels Betätigung und/oder Aktivierung des Spannsatzes die radiale Breite des Spannsatzes vergrößert und somit der radiale Zwischenraum zwischen Trägerteil und Innenflanschteil ausgefüllt, insbesondere wobei ein Anpressdruck nach radial innen zum Innenflanschteil und nach radial außen zum Trägerteil aufgebaut wird.

Der Spannsatz kann an der ersten axialer Verschiebeposition am Innenflanschteil schraubverbindbar sein.

Erfindungsgemäß liegt der Spannsatz an einer zweiten, von der ersten axial beabstandeten Verschiebeposition an der ersten Stufe an,
wobei der Spannsatz im betätigten Zustand kraftschlüssig verbunden ist mit dem Trägerteil und dem Innenflanschteil. Von Vorteil ist dabei, dass ein wohldefiniertes Anliegen und somit Ausrichten erreichbar ist.

Weiterhin ist erfindungsgemäß vorgesehen, dass die Rotorwelle mit einer anzutreibenden Welle mittels eines weiteren Spannsatzes verbindbar ist. Von Vorteil ist dabei, dass ein einfaches Verbinden der Wellen ermöglicht ist und dass hierbei ein kraftschlüssiges Verbinden ausführbar ist.

Bei einer vorteilhaften Ausgestaltung hängt der radiale Abstand zwischen Trägerteil und Spannsatz von der axialen Verschiebung ab.

In einer vorteilhaften Ausgestaltung können in den Aufnahmebereich das Innenflanschträgerteil und/ oder eine Bremsvorrichtung zumindest teilweise hineinragen. Von Vorteil ist dabei, dass durch axiales Verschieben des Spannsatzes der Abstand zum Trägerteil veränderbar ist. Insbesondere ist in einer ersten Position ein Berühren, insbesondere sogar ein kraftschlüssiges Verbinden ermöglicht und in einer zweiten Position ein auch im Betrieb des Elektromotors ausreichend großer Abstand.

Bei einer vorteilhaften Ausgestaltung ist das Innenflanschteil mit einer Bremsvorrichtung und/oder einem Flanschring verbunden. Von Vorteil ist dabei, dass die Bremsvorrichtung mit dem Innenflanschteil vorkomplettiert ausbildbar ist, also als transportfähige Einheit, die als Ganzes verbindbar ist mit dem Statorgehäuse, also in nur einem Verfahrensschritt.

Bei einer vorteilhaften Ausgestaltung ist die Bremsvorrichtung elektromagnetisch betätigbar.

Bei einer vorteilhaften Ausgestaltung weist die Bremsvorrichtung einen Elektromagnet auf und eine drehfest mit dem Stator und dem Elektromagnet verbundene, aber axial bewegbar angeordnete Ankerscheibe, welche von einem Federelement vom Elektromagneten weg gedrückt auf ein Bremsbelagträgerteil, das drehfest, aber axial bewegbar mit der Rotorwelle verbunden ist.

Bei einer vorteilhaften Ausgestaltung ist das Trägerteil radial innerhalb der Statorwicklung und innerhalb des Statorblechpakets des Stators angeordnet,
wobei der größte Radialabstandswert des Spannsatzes zur Rotorwellenachse kleiner ist als der größte Radialabstandswert des Trägerteils zur Rotorwellenachse. Von Vorteil ist dabei, dass der Spannsatz im Trägerteil aufnehmbar ist und somit radial zwischen Trägerteil und Innenflanschteil anordenbar ist, so dass bei Betätigung, also Erhöhung der radialen Breite des Spannsatzes ein kraftschlüssiges Verbinden ermöglicht ist. Das Innenflanschteil ist im Verbindungsbereich auf kleinerem Radialabstand angeordnet als der Spannsatz. Somit ist die radial innere Seite des Spannsatzes an das Innenflanschteil anlegbar.

Der weitere Spannsatz kann umfassen eine zwischen einer vom Elektromotor anzutreibenden Welle, die einen Hohlwellenabschnitt aufweist, und der Rotorwelle angeordnete Buchse, welche einen mit Öl befüllten Raumbereich aufweist, der durch Betätigung einer schraube mit einem derartigen Druck beaufschlagt ist, dass die Buchse elastisch derart verformt ist, dass Welle und Hohlwellenabschnitt kraftschlüssig verbunden sind

Die Erfindung wird nun anhand von Abbildungen näher erläutert:
In den Figuren ist in der Reihenfolge der Nummerierung der Figuren eine Montagereihenfolge eines erfindungsgemäßen Elektromotors dargestellt.

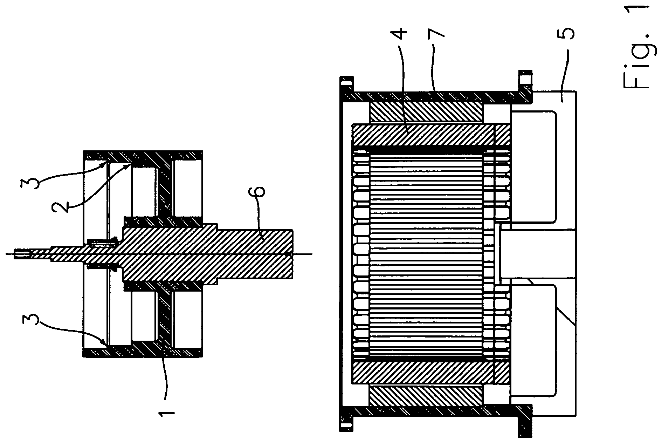

Wie in Figur 1 dargestellt, wird der Rotor, insbesondere dessen Rotorwelle 6, in einem mit dem Statorgehäuse 7 verbundenen Positionierhilfsteil 5 aufgenommen, so dass er relativ zum Stator in der vorgesehenen Ausrichtung und Position gehalten ist.

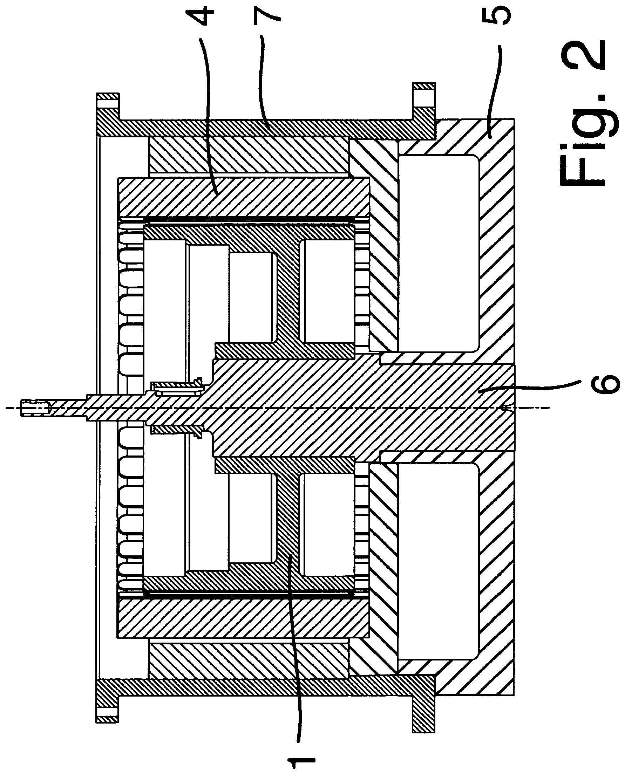

Wie in Figur 2 dargestellt, ist der Rotor somit in dem Positionierhilfsteil 5 aufgenommen.

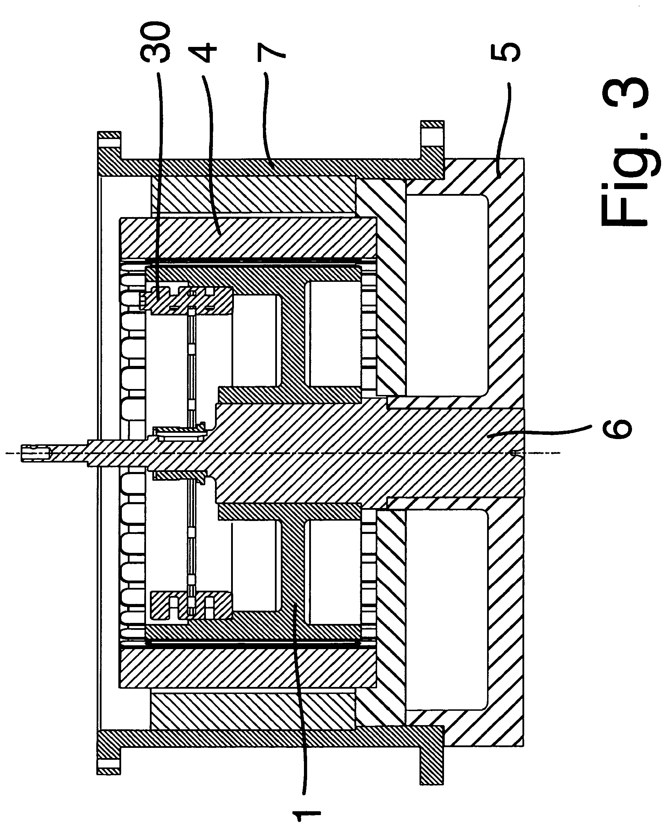

Wie in Figur 3 gezeigt, wird ein Spannsatz 30 in ein Trägerteil 1 des Rotors eingebracht, insbesondere wobei der Spannsatz 30 gegen einen als Anschlag vorgesehenen Stufe des Innendurchmesserverlaufs des Trägerteils 1 angelegt ist.

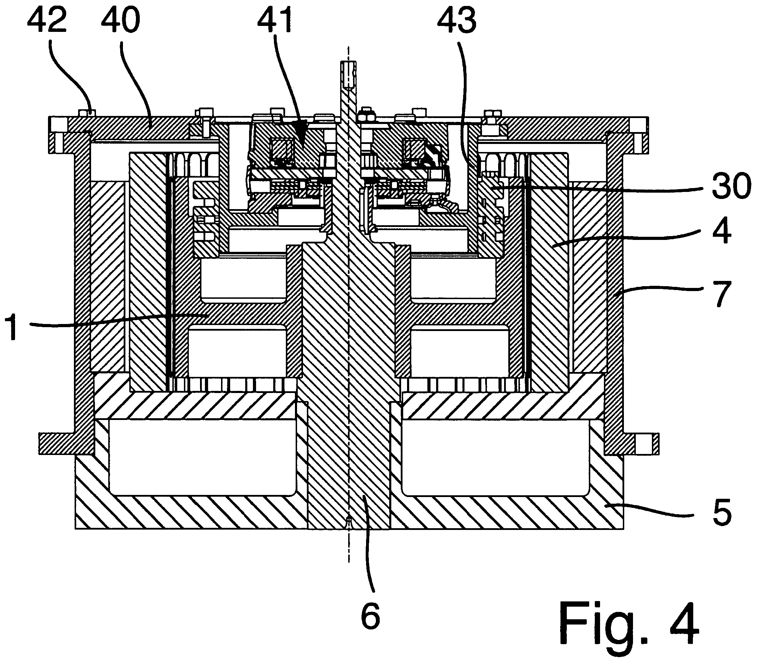

Wie in Figur 4 gezeigt, wird ein Flanschring 40 mit dem Statorgehäuse 7 verbunden, wobei eine mit dem Flanschring 40 verbundene Bremsvorrichtung 41 in den Motor eingebracht wird und der Spannsatz 30 betätigt wird, also der Innenflansch 43 mit dem Trägerteil 1 kraftschlüssig verbunden wird.

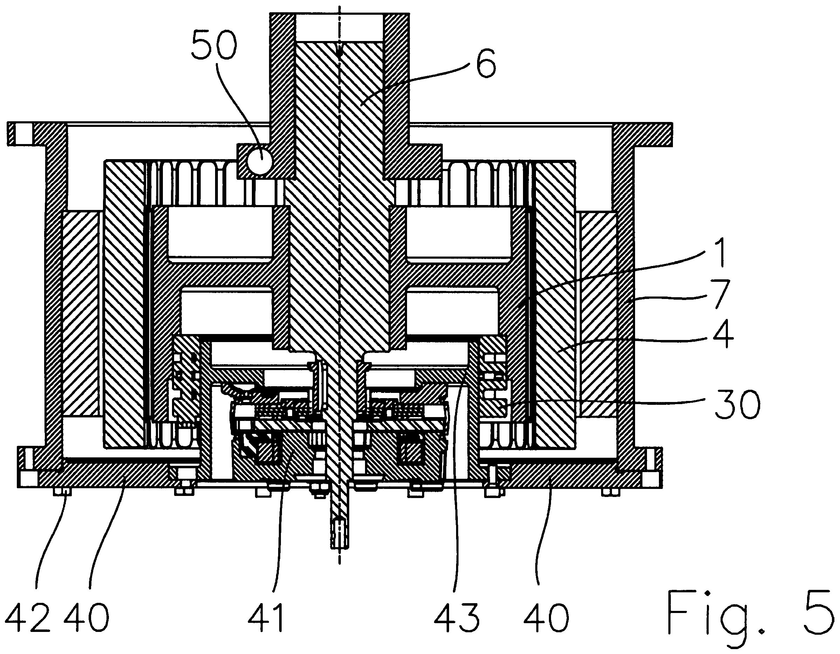

Wie in Figur 5 gezeigt, wird ein weiterer Spannsatz 50 eingebracht und mit der Rotorwelle 6 verbunden.

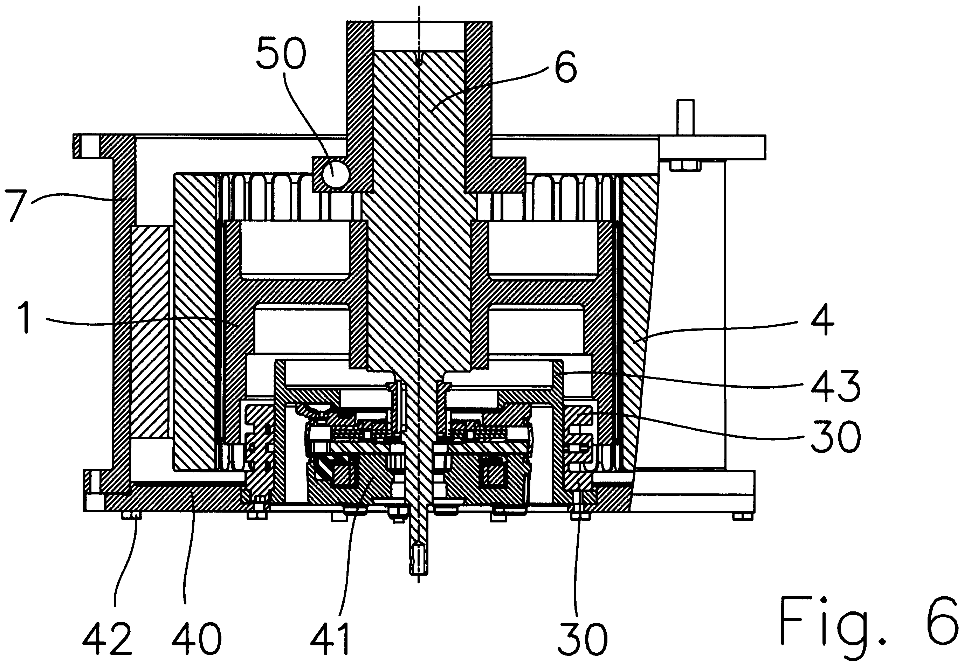

Wie in Figur 6 gezeigt, wird nach dem Betätigen des Weiteren Spannsatzes 50 zur Verbindung der Rotorwelle 6 mit einer weiteren, in der Figur 6 nicht dargestellten, insbesondere anzutreibenden Welle einer nicht näher dargestellten Maschine und nach Verbinden des Statorgehäuses 7 mit einem die Rotorwelle lagernden Gehäuseteil einer nicht näher dargestellten Maschine der Spannsatz 30 gelöst und axial abgesenkt, also axial von der als Anschlag vorgesehenen Stufe.

In den Figuren ist kein die Rotorwelle aufnehmendes Lager vorhanden.

Die Rotorwelle 6 wird nach Einbau in die nicht dargestellte Maschine mit deren Welle mittels des Weiteren Spannsatzes 50 verbunden und somit gelagert.

Wie in Figur 1 gezeigt, ist die Rotorwelle 6 mit einem Trägerteil 1 verbunden, welches an seinem Außenumfang mit Dauermagneten bestückbar ist. Vorzugsweise werden diese Dauermagnete stoffschlüssig mit dem Trägerteil 1 verbunden, insbesondere klebeverbunden.

Das Trägerteil 1 weist eine zur Rotorwellenachse mittig angeordnete Stufenbohrung oder gestufte Ausdrehung auf. Der Innendurchmesserverlauf verläuft in axialer Richtung monoton steigend, wobei der Durchmesserverlauf gestuft ausgeführt ist. Dabei sind mindestens zwei Stufen vorgesehen. Die axial weiter innen liegende der beiden Stufen dient als Anschlag für den später einzubringenden Spannsatz 30. Die andere der beiden Stufen führt zu einem aufgeweiteten Bereich.

Wie in Figur 1 gezeigt, wird ein Positionierhilfsteil 5 am Statorgehäuse 7 angebracht, wobei das Positionierhilfsteil axial beabstandet ist oder angrenzt an das Statorblechpaket und/oder an die vom Statorblechpaket aufgenommene Statorwicklung 4.

Wie in Figur 2 gezeigt, ist das Positionierhilfsteil 5 an einem Zentrierbund, insbesondere an einer Außenkante, des Statorgehäuses 7 zentriert und positioniert.

Das Positionierhilfsteil 5 weist eine mittig an ihm angeordnete Ausnehmung auf, in welche die Rotorwelle 6 einführbar ist und somit ausrichtbar, so dass die Rotorwelle axial und radial positioniert ist.

Die Ausnehmung im Positionierhilfsteil 5 ist zylindrisch ausgeführt und richtet die Rotorwelle 6, welche an ihrem in die Ausnehmung eingeführten Bereich außenzylindrisch ausgeführt ist, entsprechend aus und hält die Rotorwelle 6 in dieser Ausrichtung.

Das Positionierhilfsteil 5 ist mit dem Statorgehäuse 7 verbunden.

Wie in Figur 3 gezeigt, wird der im Wesentlichen ringförmige Spannsatz 30 in die mit dem gestuften Innendurchmesserverlauf ausgeführte Aufnahmeausnehmung eingeführt bis zum von der ersten Stufe, also von der axial weiter innen liegenden der beiden Stufen, gebildeten Anschlag.

Wie in Figur 4 gezeigt, wird in einem nächsten Herstellschritt auf den von der Positionierhilfsteil 5 abgewandten axialen Endbereich des Statorgehäuses 7 ein Flanschring 40 aufgesetzt und verbunden. Mit diesem Flanschring 40 ist auch eine Bremsvorrichtung 41 verbunden.

Dabei umfasst die Bremsvorrichtung 41 einen Elektromagnet, ein Federelement sowie eine Ankerscheibe, die vom bestromten Elektromagneten entgegen der von der dem Federelement erzeugten Federkraft angezogen wird. Bei Nicht-Bestromung wird diese Ankerscheibe vom Elektromagnet weggedrückt. Die Ankerscheibe ist axial bewegbar aber drehfest mit dem Elektromagnet beziehungsweise mit dem Flanschring 40 verbunden. Eine Bremsbelagträgerscheibe ist axial bewegbar aber drehfest mit der Rotorwelle 6, insbesondere mit einer eine Außenverzahnung aufweisenden Buchse verbunden, die mittels einer Passfederverbindung drehfest mit der Rotorwelle 6 verbunden ist, wobei die Bremsbelagträgerscheibe eine entsprechende Innenverzahnung aufweist. Somit drückt das Federelement die Ankerscheibe auf die Bremsbelagträgerscheibe, die auf ihrer zur Ankerscheibe zugewandten Seite einen Bremsbelag aufweist, so dass die Ankerscheibe in Reibkontakt tritt mit dem Bremsbelag der Bremsbelagträgerscheibe, wenn der Elektromagnet nicht bestromt wird.

Die Bremsvorrichtung weist auch ein eine Bremsfläche aufweisendes Teil auf, gegen welche die Bremsbelagträgerscheibe mit ihrem weiteren, auf der von der Ankerscheibe abgewandten Seite angeordneten Bremsbelag gedrückt wird, so dass der Reibkontakt beidseitig an der Bremsbelagträgerscheibe bewirkbar ist. Die Bremsbelagträgerscheibe ist daher zwischen der Bremsfläche und der Ankerscheibe angeordnet.

Die Bremsvorrichtung ist in einem Innenflanschteil 43 aufgenommen, welches mit dem Flanschring 40 mittels Schrauben 42 verbunden ist.

Der Spannsatz 30 sitzt radial zwischen dem Innenflanschteil 43 und dem Trägerteil 1.

Bei Betätigung des Spannsatzes 30 wächst dessen radiale Wandstärke. Somit nimmt also der Außendurchmesser des Spannsatzes 30 etwas zu und der Innendurchmesser etwas ab. Auf diese Weise werden Innenflanschteil 43 und Trägerteil 1 mittels des Spannsatzes kraftschlüssig verbunden.

Der Flanschring 40 ist also mit der Bremsvorrichtung 41 und dem Innenflanschteil 43 vorkomplettiert, bevor er mit dem Statorgehäuse 7 verbunden wird.

Die eingesetzte solchermaßen vorkomplettierte Einheit wird also mittels des Spannsatzes 30 zentriert und ausgerichtet; mittels der schrauben 42 werden Flanschring 40 und Statorgehäuse 7 fest verbunden in der durch den Spannsatz 30 vorgegebenen Ausrichtung und Zentrierung. Stator und Rotor sind also somit zueinander zentriert sowie die relative Positionierung festgelegt.

Nachfolgend wird das Positionierhilfsteil 5 entfernt.

Die auf diese Weise hergestellte Vorrichtung ist somit transportfähig und lagerfähig, aber nicht als Motor betreibbar, solange der Spannsatz 30 betätigt ist, also Trägerteil 4 mit Flanschring 40 kraftschlüssig und somit drehfest verbunden ist.

Zuletzt wird die Vorrichtung in eine Maschine oder Anlage eingebaut, die eine in den Figuren nicht dargestellte, insbesondere anzutreibende Welle und ein die Rotorwelle lagerndes Gehäuseteil aufweist. Beim Einbauen wird dieses Gehäuseteil mit dem Statorgehäuseteil 7 verbunden, insbesondere schraubverbunden, und die anzutreibende Welle mit der Rotorwelle 6 vorzugsweise mittels einer Verbindungseinrichtung, wie beispielhaft der Spannsatz 50.

Vorzugsweise ist dieser Spannsatz 50 als Hydraulikspannsatz ausgeführt. Hierbei weist eine auf die Rotorwelle 6 aufgeschobene Buchse einen geschlossenen mit Öl befüllten Raumbereich auf, der in dem Material der Buchse eingeschlossen und/oder angeordnet ist. Mittels einer Schraube ist der Öldruck in diesem Raumbereich erhöhbar und somit die Buchse elastisch verformbar. Dabei wird wächst die radiale Breite der Buchse, insbesondere wobei die axiale Länge schrumpfen darf. Die anzutreibende Welle ist hierbei als Hohlwelle ausgeführt und auf die Buchse aufgeschoben, wobei sie an einer an der Buchse ausgeformten Stufe anliegt. Bei Betätigen der Schraube, also Betätigen des Hydraulikspannsatzes, wächst also die radiale Breite der zwischen Rotorwelle und anzutreibender Hohlwelle angeordneten Buchse an, so dass eine kraftschlüssige Verbindung zwischen Rotorwelle 6 und anzutreibender Hohlwelle bewirkt wird.

Somit ist dann der Spannsatz 30 deaktivierbar, wobei seine radiale Breite abnimmt und er somit gelöst wird vom Trägerteil 1 und durch axiales Verschieben, beispielsweise bei vertikaler oder zumindest nicht horizontaler Ausrichtung der Rotorwelle bewirkt durch die Schwerkraft.

Beim axialen Absenken des Spannsatzes 30 wird dieser von der ersten Stufe weg bis mindestens über die zweite Stufe axial weggeschoben, so dass der radiale Abstand zwischen Spannsatz 30 und Trägerteil 1 wegen des in dieser axialen Richtung, also der Schieberichtung, zunehmenden Innendurchmessers des Trägerteils 1 zunimmt und der Spannsatz 30 nur noch am Innenflanschteil 43 anliegt, wo er mit einer axial durch den Flanschring 40 und/oder durch das Innenflanschteil 43 durchgehenden Schraube anschraubbar ist.

Der Rotor ist somit zur Drehbewegung freigegeben und die Maschine oder Anlage betriebsbereit.

Die Maschine ist vorzugsweise auf der von der Bremsvorrichtung abgewandt angeordneten axialen Seite des Stators verbindbar.

Bei einer nachfolgenden eventuellen Demontage wird die zuletzt genannte Schraubverbindung des Spannsatzes 30 wiederum gelöst und der Spannsatz wieder axial bis zur als Anschlagwirksamen Stufe verschoben und betätigt, so dass eine kraftschlüssige Verbindung zwischen Trägerteil 1 und Innenflanschteil 43 wiederhergestellt wird. Somit ist die Positionierung von Rotor zu Stator wieder sichergestellt und die Vorrichtung ist von der Maschine beziehungsweise Anlage lösbar.

### Bezugszeichenliste

1 Trägerteil des Rotors
2 erste Stufe, insbesondere axialer Anschlag
3 zweite Stufe
4 im Statorblechpaket aufgenommene Statorwicklung
5 Positionierhilfsteil
6 Rotorwelle
7 Statorgehäuse
30 Spannsatz
40 Flanschring
41 Bremsvorrichtung
42 Schraube, insbesondere Verbindungsschraube
43 Innenflanschteil
50 weiterer Spannsatz, insbesondere Hydraulikspannsatz

## Patentansprüche

1. Verfahren zum Herstellen einer elektromotorisch angetriebenen Maschine,
wobei ein Elektromotor, aufweisend einen Stator und einen Rotor, zum elektromotorischen Antrieb der Maschine vorgesehen ist,
wobei die Lagerung des Rotors nicht im Stator, sondern in der vom Elektromotor angetriebenen Maschine ausgeführt wird,
**dadurch gekennzeichnet, dass**
- in einem ersten Verfahrensschritt der Rotor in einem mit einem Statorgehäuse (7) des Stators verbundenen Positionierhilfsteil (5) aufgenommen wird, wobei das Positionierhilfsteil (5) den Rotor positioniert und ausgerichtet und wobei das Positionierhilfsteil (5) am Statorgehäuseteil zentriert und ausgerichtet ist,
- in einem darauf folgenden Verfahrensschritt ein Spannsatz (30) in einen Aufnahmebereich eines Trägerteils des Rotors eingeführt wird,
- ein Innenflanschteil (43) lose am Statorgehäuse (7) angeordnet wird,
- in einem darauf folgenden Verfahrensschritt der Spannsatz (30) betätigt wird, so dass das Innenflanschteil (43) mit dem Trägerteil (1)kraftschlüssig verbunden wird und relativ ausgerichtet wird und zentriert wird,
- in einem darauf folgenden Verfahrensschritt Statorgehäuse (7) und Innenflanschteil (43) fest verbunden wird,
- in einem darauffolgenden Verfahrensschritt das Positionierhilfsteil (5) entfernt wird,
- in einem darauf folgenden Verfahrensschritt der Rotor verbunden wird mit einem Hohlwellenabschnitt einer anzutreibenden Welle der Maschine und das Statorgehäuse (7) mit einem Gehäuse der Maschine verbunden, in welchem die Welle gelagert ist,
- in einem darauffolgenden Verfahrensschritt der Spannsatz (30) gelöst wird, axial verschoben wird und dann mit dem Innenflanschteil (43) verbunden wird.

2. Verfahren nach Anspruch 1,
**dadurch gekennzeichnet, dass**
das Verbinden des Rotors mit dem Hohlwellenabschnitt der anzutreibenden Welle mittels eines weiteren Spannsatzes (50) ausgeführt wird.

3. Verfahren nach Anspruch 2,
**dadurch gekennzeichnet, dass**
der weitere Spannsatz (50) ein Hydraulikspannsatz ist, der in einer Buchse integriert angeordnet ist.

4. Verfahren nach Anspruch 3,
**dadurch gekennzeichnet, dass**
wobei ein Öl befüllter Raumbereich vom Material der Buchse umgeben ist und mit einem derartigen Druck beaufschlagbar ist, dass die radiale Breite der Buchse veränderbar ist.

5. Elektromotor, aufweisend einen Stator und einen Rotor, zur Durchführung eines Verfahrens nach Anspruch 1 oder 2,
wobei der Rotor eine Rotorwelle (6) und ein mit der Rotorwelle (6) drehfest verbundenes Trägerteil (1) aufweist,
wobei der Stator ein Statorgehäuse (7) und ein mit dem Statorgehäuse (7) verbundenes Innenflanschteil (43) aufweist,
wobei ein Spannsatz (30) zwischen Trägerteil (1) und Innenflanschteil (43) angeordnet ist wobei das Trägerteil (1) einen Aufnahmebereich aufweist, in den der Spannsatz (30) eingeführt ist, wobei der Aufnahmebereich einen gestuften, monoton ansteigenden Innendurchmesserverlauf aufweist,
wobei der Spannsatz (30) im nicht betätigten Zustand axial zwischen Innenflanschteil und Trägerteil verschiebbar angeordnet ist, wobei er axial durch eine am Trägerteil (1) und/oder Innenflanschteil (43) ausgeführte erste Stufe (2) axial begrenzt ist,
wobei der Spannsatz (30) an einer ersten axialen Verschiebeposition am Innenflanschteil (43) arretierbar oder befestigbar ist, wobei er beabstandet ist vom Trägerteil,
wobei der Spannsatz (30) an einer zweiten, von der ersten axial beabstandeten Verschiebeposition, an der ersten Stufe (2) anliegt,
wobei der Spannsatz (30) im betätigten Zustand kraftschlüssig verbunden ist mit dem Trägerteil (1) und dem Innenflanschteil (43),
wobei die Rotorwelle (6) mit einer anzutreibenden Welle mittels eines weiteren Spannsatzes (50) verbindbar ist.

6. Elektromotor nach Anspruch 5,
**dadurch gekennzeichnet, dass**
der radiale Abstand zwischen Trägerteil (1) und Spannsatz (30) von der axialen Verschiebeposition abhängt.

7. Elektromotor nach Anspruch 5 oder 6,
**dadurch gekennzeichnet, dass**
in den Aufnahmebereich das Innenflanschträgerteil und/oder eine Bremsvorrichtung (41) zumindest teilweise hineinragen.

8. Elektromotor nach einem der Ansprüche 5 bis 7,
**dadurch gekennzeichnet, dass**
das Innenflanschteil (43) mit einer Bremsvorrichtung (41) und/oder einem Flanschring (40) verbunden ist.

9. Elektromotor nach Anspruch 8,
**dadurch gekennzeichnet, dass**
die Bremsvorrichtung (41) elektromagnetisch betätigbar ist.

10. Elektromotor nach Anspruch 8 oder 9,
**dadurch gekennzeichnet, dass**
die Bremsvorrichtung (41) einen Elektromagnet aufweist und eine drehfest mit dem Stator und dem Elektromagnet verbundene, aber axial bewegbar angeordnete Ankerscheibe, welche von einem Federelement vom Elektromagneten weg gedrückt auf ein Bremsbelagträgerteil, das drehfest, aber axial bewegbar mit der Rotorwelle (6) verbunden ist.

11. Elektromotor nach einem der Ansprüche 5 bis 10,
**dadurch gekennzeichnet, dass**
das Trägerteil (1) radial innerhalb der Statorwicklung (4) und innerhalb des Statorblechpakets des Stators angeordnet ist,
wobei der größte Radialabstandswert des Spannsatzes (30) zur Rotorwellenachse kleiner ist als der größte Radialabstandswert des Trägerteils zur Rotorwellenachse.

## Claims

1. A method of manufacturing a machine driven by an electric motor,
wherein an electric motor, having a stator and a rotor, is provided for driving the machine by an electric motor,
wherein the rotor is not mounted in the stator, but in the machine driven by the electric motor, **characterised in that**
- in a first method step, the rotor is received in a positioning auxiliary part (5) connected to a stator housing (7) of the stator, wherein the positioning auxiliary part (5) positions and orients the rotor and wherein the positioning auxiliary part (5) is centred and oriented on the stator housing part,
- in a subsequent method step, a clamping set (30) is inserted into a receiving region of a support part of the rotor,
- an inner flange part (43) is loosely arranged on the stator housing (7),
- in a subsequent method step, the clamping set (30) is actuated, so that the inner flange part (43) is connected to the support part (1) in a force-locked manner and is oriented and centred in a relative manner,
- in a subsequent method step, stator housing (7) and inner flange part (43) are securely connected,
- in a subsequent method step, the positioning auxiliary part (5) is removed,
- in a subsequent method step, the rotor is connected to a hollow shaft portion of a shaft, to be driven, of the machine and the stator housing (7) is connected to a housing, of the machine, in which the shaft is mounted,
- in a subsequent method step, the clamping set (30) is released, axially displaced and then connected to the inner flange part (43).

2. A method according to claim 1,
**characterised in that**
the connection of the rotor to the hollow shaft portion of the shaft to be driven is carried out by means of a further clamping set (50).

3. A method according to claim 2,
**characterised in that**
the further clamping set (50) is an hydraulic clamping set which is arranged in a bushing in an integrated manner.

4. A method according to claim 3,
**characterised in that**
wherein a spatial region filled with oil is surrounded by the material of the bushing and can be acted upon by a pressure such that the radial width of the bushing can be changed.

5. An electric motor, having a stator and a rotor, for carrying out a method according to claim 1 or 2,
wherein the rotor has a rotor shaft (6) and a support part (1) connected to the rotor shaft (6) in a rotationally-fixed manner,
wherein the stator has a stator housing (7) and an inner flange part (43) connected to the stator housing (7),
wherein a clamping set (30) is arranged between support part (1) and inner flange part (43), wherein the support part (1) has a receiving region into which the clamping set (30) is inserted, wherein the receiving region has a stepped inside diameter course increasing in a monotonic manner,
wherein the clamping set (30) is arranged so as to be axially displaceable between inner flange part and support part in the non-actuated state, wherein axially it is axially bounded by a first step (2) realised at the support part (1) and/or inner flange part (43),
wherein the clamping set (30) can be locked or secured to the inner flange part (43) at a first axial displacement position, wherein it is spaced apart from the support part,
wherein the clamping set (30) rests against the first step (2) at a second displacement position axially spaced apart from the first displacement position,
wherein the clamping set (30) is connected to the support part (1) and the inner flange part (43) in a force-locked manner in the actuated state,
wherein the rotor shaft (6) is connectable by means of a further clamping set (50) to a shaft to be driven.

6. An electric motor according to claim 5,
**characterised in that**
the radial spacing between support part (1) and clamping set (30) depends on the axial displacement position.

7. An electric motor according to claim 5 or 6,
**characterised in that**
the inner flange support part and/or a braking device (41) at least partially project(s) into the receiving region.

8. An electric motor according to any one of claims 5 to 7,
**characterised in that**
the inner flange part (43) is connected to the braking device (41) and/or a flange ring (40).

9. An electric motor according to claim 8,
**characterised in that**
the braking device (41) can be actuated electromagnetically.

10. An electric motor according to claim 8 or 9,
**characterised in that**
the braking device (41) has an electromagnet and an armature disc, connected to the stator and the electromagnet in a rotationally-fixed manner yet arranged in an axially movable manner, which by means of a spring element is pushed away from the electromagnet onto a brake lining carrier part connected to the rotor shaft (6) in a rotationally-fixed yet axially movable manner.

11. An electric motor according to any one of claims 5 to 10,
**characterised in that**
the support part (1) is arranged radially within the stator winding (4) and within the stator iron core of the stator,
wherein the greatest radial spacing value of the clamping set (3) from the rotor shaft axis is smaller than the greatest radial spacing value of the support part from the rotor shaft axis.

## Revendications

1. Procédé de fabrication d'une machine entraînée par moteur électrique,
un moteur électrique, qui comporte un stator et un rotor, étant prévu pour entraîner la machine par moteur électrique,
le montage du rotor étant effectué non pas dans le stator mais dans la machine entraînée par le moteur électrique, **caractérisé en ce que**
- dans une première étape de procédé, le rotor est reçu dans une partie de positionnement auxiliaire (5) reliée à un boîtier (7) du stator, la partie de positionnement auxiliaire (5) positionnant et orientant le rotor et la partie de positionnement auxiliaire (5) étant centrée et orientée au niveau de la partie de boîtier de stator,
- dans une étape de procédé ultérieure, un ensemble de serrage (30) est introduit dans une zone de réception d'une partie de support du rotor,
- une partie formant bride intérieure (43) est disposée de manière amovible au niveau du boîtier de stator (7),
- dans une étape de procédé ultérieure, l'ensemble de serrage (30) est actionné de sorte que la partie formant bride intérieure (43) soit reliée en force à la partie de support (1) et soit relativement orientée et centrée,
- dans une étape de procédé ultérieure, le boîtier de stator (7) et la partie formant bride intérieure (43) sont reliés de manière fixe,
- dans une étape de procédé ultérieure, la partie de positionnement auxiliaire (5) est retirée,
- dans une étape de procédé ultérieure, le rotor est relié à une portion d'arbre creux d'un arbre à entraîner de la machine et le boîtier de stator (7) est relié à un boîtier de la machine dans lequel l'arbre est logé,
- dans une étape de procédé ultérieure, l'ensemble de serrage (30) est desserré, déplacé axialement puis relié à la partie formant bride intérieure (43).

2. Procédé selon la revendication 1,
**caractérisé en ce que**
la liaison du rotor à la portion d'arbre creux de l'arbre à entraîner est réalisée à l'aide d'un autre ensemble de serrage (50).

3. Procédé selon la revendication 2,
**caractérisé en ce que**
l'autre ensemble de serrage (50) est un ensemble de serrage hydraulique qui est disposé intégré dans une douille.

4. Procédé selon la revendication 3,
**caractérisé en ce que**
un espace rempli d'huile est entouré par le matériau de la douille et peut être soumis à une pression telle que la largeur radiale de la douille peut être modifiée.

5. Moteur électrique comportant un stator et un rotor et destiné à mettre en œuvre un procédé selon la revendication 1 ou 2,
le rotor comportant un arbre de rotor (6) et une partie de support (1) reliée solidairement en rotation à l'arbre de rotor (6),
le stator comportant un boîtier de stator (7) et une partie formant bride intérieure (43) reliée au boîtier de stator (7),
un ensemble de serrage (30) étant disposé entre la partie de support (1) et la partie formant bride intérieure (43),
la partie de support (1) comportant une zone de réception dans laquelle l'ensemble de serrage (30) est introduit, la zone de réception comportant un profil de diamètre intérieur en gradins, croissant de manière monotone,
l'ensemble de serrage (30) étant déplaçable axialement à l'état non actionné entre la partie formant bride intérieure et la partie de support et étant limité axialement par un premier gradin (2) réalisé au niveau de la partie de support (1) et/ou de la partie formant bride intérieure (43),
l'ensemble de serrage (30) pouvant être bloqué ou fixé à une première position de déplacement axiale au niveau de la partie formant bride intérieure (43) et étant espacé de la partie de support,
l'ensemble de serrage (30) étant en appui, à une deuxième position de déplacement espacée axialement de la première, sur le premier gradin (2),
l'ensemble de serrage (30) étant relié à l'état actionné en force à la partie de support (1) et à la partie formant bride intérieure (43),
l'arbre de rotor (6) pouvant être relié à un arbre à entraîner à l'aide d'un autre ensemble de serrage (50).

6. Moteur électrique selon la revendication 5,
**caractérisé en ce que**
la distance radiale entre la partie de support (1) et l'ensemble de serrage (30) dépend de la position de déplacement axial.

7. Moteur électrique selon la revendication 5 ou 6,
**caractérisé en ce que**
la partie de support de bride intérieure et/ou un dispositif de freinage (41) font saillie au moins partiellement dans la zone de réception.

8. Moteur électrique selon l'une des revendications 5 à 7,
**caractérisé en ce que**
la partie formant bride intérieure (43) est reliée à un dispositif de freinage (41) et/ou une bague de bride (40) .

9. Moteur électrique selon la revendication 8,
**caractérisé en ce que**
le dispositif de freinage (41) peut être actionné par un moyen électromagnétique.

10. Moteur électrique selon la revendication 8 ou 9,
**caractérisé en ce que**
le dispositif de freinage (41) comporte un électroaimant et un disque d'induit qui est relié solidairement en rotation au stator et à l'électroaimant, mais est disposé de manière mobile axialement et qui est repoussé de l'électroaimant par un élément à ressort vers une partie de support de garniture de frein qui est reliée à l'arbre de rotor (6) solidairement en rotation mais de manière mobile axialement.

11. Moteur électrique selon l'une des revendications 5 à 10,
**caractérisé en ce que**
la partie de support (1) est disposée radialement à l'intérieur de l'enroulement de stator (4) et à l'intérieur du noyau du stator,
la plus grande valeur de distance radiale de l'ensemble de serrage (30) à l'axe d'arbre de rotor étant inférieure à la valeur de distance radiale la plus grande de la partie de support à l'axe d'arbre de rotor.
